# EUROPÄISCHE PATENTSCHRIFT

(11) **EP 1 928 700 B1**
(45) Veröffentlichungstag und Bekanntmachung des Hinweises auf die Patenterteilung: **15.04.2009**
(21) Anmeldenummer: 06706954.2
(22) Anmeldetag: 15.02.2006
(51) Int. Cl.: B60R 11/02

(54) **LAUTSPRECHERSYSTEM FÜR KRAFTFAHRZEUGE UNTER AUSNUTZUNG VON DURCH TRAGSTRUKTUREN GEBILDETEN HOHLRÄUMEN**
LOUDSPEAKER SYSTEM FOR MOTOR VEHICLES UTILIZING CAVITIES FORMED BY SUPPORTING STRUCTURES
SYSTEME DE HAUT-PARLEUR POUR VEHICULES AUTOMOBILES, FAISANT INTERVENIR L'UTILISATION DE CAVITES FORMEES PAR DES STRUCTURES DE SUPPORT

(30) Priorität: 28.09.2005 DE 102005046594
(43) Veröffentlichungstag der Anmeldung: 11.06.2008
(73) Patentinhaber: Daimler AG, 70567 Stuttgart (DE)
(72) Erfinder: ALBUS, Rainer, 72358 Dormettingen (DE); NIEMCZYK, Norbert, 75180 Pforzheim (DE)
(86) Internationale Anmeldenummer: PCT/EP2006/001350
(87) Internationale Veröffentlichungsnummer: WO 2007/036245

(56) Entgegenhaltungen:
- EP-A- 1 519 617
- DE-A1- 10 353 578
- DE-A1- 19 735 082
- DE-A1- 19 909 143
- FR-A- 2 774 351
- US-B1- 6 310 958

## Beschreibung

Die Erfindung betrifft ein Lautsprechersystem für Fahrzeuge unter Ausnutzung der durch Tragstrukturen gebildeten Hohlräume nach dem Oberbegriff des Patentanspruchs 1.

In einem Kraftfahrzeug wird üblicherweise bereits serienmäßig oder als Sonderausstattung eine Soundanlage installiert, die z.B. ein Radio, ein Kassetten- und ein CD-Abspielgerät aufweist. Außerdem umfasst eine bessere Soundanlage ein Boxensystem, das Hochtonlautsprecher und Tieftonlautsprecher, so genannte Bassboxen, aufweist.

Bassboxen benötigen zur Erzeugung eines kräftigen Basses ein relativ großes Einbauvolumen, für das im Innenraum eines Kraftfahrzeuges; insbesondere in einem Personenkraftfahrzeug, häufig nicht genügend Raum zur Verfügung steht. Bei dem Wunsch nach einem kräftigen Bass der Soundanlage für Fahrer und Beifahrer benötigt eine Bassbox ein Volumen in der Größenordnung von wenigstens 10 bis 15 Litern. Bassboxen dieser Größe werden üblicherweise im Fondraum oder im Kofferraum des Fahrzeuges untergebracht, wobei sich jedoch ein entsprechender Nutzraumverlust einstellt. Eine im Fondraum oder Kofferraum angeordnete Bassbox benötigt außerdem ein zusätzlich vergrößertes Volumen, um beim Fahrer bzw. Beifahrer den gewünschten Sound erzeugen zu können.

Um das in den Freiraum des Fahrzeuges einzubringende Resonanzvolumen einer Bassbox zu minimieren, wird in der deutschen Offenlegungsschrift DE 197 35 082 A1 die ein Lautsprechersystem nach dem Oberbegriff des Anspruchs 1 offenbart, vorgeschlagen, eine an die Rückseite des Lautsprechers gekoppelte Lautsprecherbox relativ kleinen Ausmaßes auf das von einem Tragrahmen umschlossene Schwellervolumen aufzusetzen und diese beiden Volumina über eine Durchtrittsöffnung akustisch zu koppeln. Um das Resonanzvolumen über das Volumen des Schwellers hinaus weiter zu vergrößern, ist vorgesehen, das Schwellervolumen über Diffusionsöffnungen mit der Umgebung zu verbinden. Dadurch wird das Resonanzvolumen gebildet durch den Rückraum des Lautsprechers, das Schwellervolumen sowie das sich daran anschließende Umgebungsvolumen.

Eine andere Ausgestaltung um einen unter dem Fahrzeugsitz angeordneten Basslautsprecher mit vergrößertem Resonanzvolumen auszustatten beschreibt des deutsche Patent DE 699 07 412 T2, bei welchem vorgeschlagen wird, den unter dem Fahrzeugsitz befindlichen Boden mit einem Zwischenboden zu versehen und hierin ein dem Basslautsprecher zuzuordnendes Volumen abzuteilen, welches sodann mit diesem akustisch gekoppelt wird.

Aufgabe der Erfindung ist es eine weitere Möglichkeit zur Schaffung eines Lautsprechersystems mit großvolumigem Resonanzraum für ein Kraftfahrzeuges zu finden.

Die Aufgabe wird durch ein Lautsprechersystem mit den Merkmalen des Patentanspruchs 1 gelöst. Vorteilhafte Weiterbildungen und Ausgestaltungen der Erfindung werden durch die Unteransprüche beschrieben.

Das Lautsprechersystem für ein Kraftfahrzeug, umfasst wenigstens einen aktiven Schallwandler (2), welcher in dem Lautsprechersystem integriert so ausgerichtet ist, dass der von ihm erzeugte Schall in das Innere des Kraftfahrzeuges (1) abstrahlt. Dabei ist der Schallwandler (2) auf seiner Rückseite akustisch an einen Resonanzraum angekoppelt, welcher zumindest in Teilen durch den Hohlraum innerhalb einer Tragstruktur des Fahrzeuges gebildet wird. In erfinderischer Wiese erfolgt die akustische Ankopplung des Schallwandlers (2) im Umfeld eines Bereichs des Fahrzeuges (1), in welchem wenigstens zwei Elemente (3,4,5) der Tragstruktur aufeinander treffen, so dass zumindest ein Teil des Resonanzraums gemeinsam durch die Hohlräume dieser wenigsten zwei Elemente (3, 4, 5) der Tragstruktur gebildet wird.

In besonders vorteilhafter Weise werden durch die erfinderische Positionierung des Schallwandlers (2) werden an diesen gleichzeitig die Volumina mehrer Strukturelemente (3, 4, 5) als Resonanzraum akustisch angekoppelt.

Dabei kann die akustische Ankopplung zum einen derart erfolgen, dass durch eie die Rückseite des Schallwandlers (2) direkt in die Innenvolumen mehrer Elemente (3, 4, 5) der Tragstruktur erstreckt, oder aber dass nur ein Volumen einer Tragstruktur in direktem Kontakt mit der Rückwand des Schallwandlers (2) steht und die anderen Volumina sich akustisch mit dieses Volumen gekoppelt an diese Tragstruktur anschließen.

In einer weiteren vorteilhaften Ausgestaltung der Erfindung wäre es gleichwohl auch möglich, dass die Volumina mehrerer Tragstrukturen (3,4,5) über einen Kanal oder über einen diese Volumina verbindenden Raum (8) akustisch miteinander gekoppelt sind. In diesem Fall würde sich die Rückwand des Schallwandlers (2) in diesen Kanal bzw. Raum (8) erstrecken und so den Schallwandler (2) an die Volumina der Tragstrukturen ankoppeln. Eine solche Ankopplung des Schallwandlers (2) über einen Raum (8) bzw. Kanal bietet sich vor allem dann an, wenn sich an der beabsichtigten Einbauposition, insbesondere auf Grund der Fahrzeuginnenverkleidung (beispielsweise: Stirnwand (9)), kein direkter Kontakt mit den Elementen (3,4,5) der Tragstruktur herstellen lässt.

Nachfolgend wird die Erfindung anhand von Figuren im Detail beschrieben. Dabei zeigt
- Figur 1: die Draufsicht und Seitenansicht eines Fahrzeuges (1) mit Ankopplung des Schallwandlers (2) an Längsträger- (5), Querträger- (4) und Schwellervolumen (3),
- Figur 2: die Draufsicht und Seitenansicht der Front eines Fahrzeuges (1) mit Ankopplung des Schallwandlers (2)über einen Raum (8) an die Volumina mehrer Elemente der Tragstruktur.

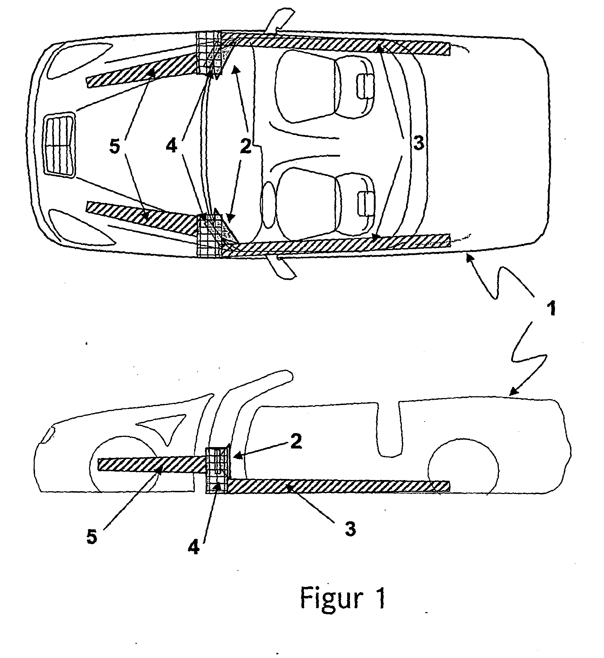

Die Figur 1 zeigt schematisch die Draufsicht und Seitenansicht eines Fahrzeuges (1), bei welchem die Ankopplung des Schallwandlers (2) in den Fußräumen der Sitzplätze des Fahrer und des Beifahrers erfolgt. Dabei ist die Einbauposition des Schallwandlers (2) so gewählt, dass sich seine Einkoppelstelle im Bereich des Zusammenlaufs bzw. des Schnittpunktes des Längsträger- (5), Querträger- (4) und Schwellervolumen (3). Je nach technischer Ausführung der Rohbaustruktur des Fahrzeuges (1) wäre es nun einerseits denkbar, dass sich die Öffnung, über welche der Schallwandler (2) in die Volumina der Elementen (3,4,5) der Tragstruktur eingebracht wird, so ausgestaltet ist, dass diese gleichzeitig in die Wandungen mehrerer der Elemente (3,4,5) eingreift, oder aber andererseits, dass die Öffnung nur in ein einzelnes der Volumina der Elemente (3,4,5) eingreift und die anderen Volumina durch akustisch wirksame Durchlassöffnung mit diesem einen Volumen in Verbindung stehen. Dieser letzte Fall ist in der Figur 1 dargestellt. Hierbei ist der Schallwandler (2) über eine Öffnung direkt in das Volumen des Querträgers (4) eingelassen. Die Volumina des Längsträgers (5) und des Schwellers (3) stehen über Durchlassöffnungen akustisch gekoppelt mit dem Querträger in Verbindung. Auf diese Weise verfügen die Schallwandler (2) über ein Resonanzvolumen, welches gemeinsam durch mehrere Elemente (3,4,5) der Tragstruktur des Fahrzeuges (1) gebildet werden und somit ein Gesamtvolumen von größer als 15 Litern aufweist.

Alternativ lassen sich besonders vorteilhaft auf die Volumina von Längsträger, Stirnwandquerträger und Pedalquerträger miteinander Koppeln, so dass sich auch hier ein Resonanzvolumen im Bereich von 13-15 Litern erzielen lässt. Eine Kopplung dieser Elemente der Tragstruktur bietet sich vor allem deshalb an, da sie meist recht nahe zueinander benachbart sind, so dass sich deren Volumina relativ einfach gemeinsam akustisch koppeln lassen.

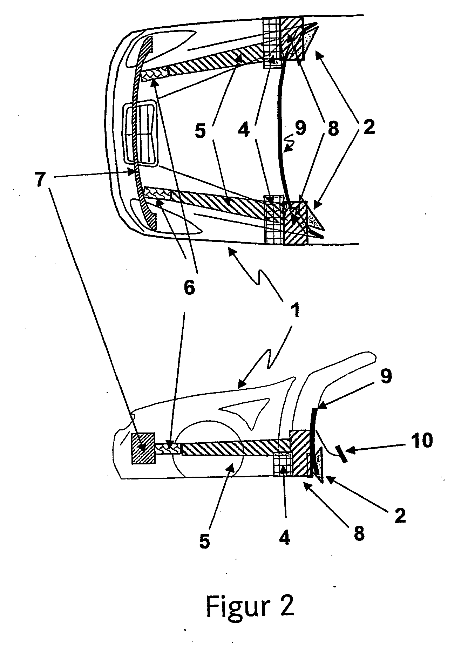

In der Figur 2 wird eine Variante zu der zuvor in Figur 1 aufgezeigten Ausgestaltung der Erfindung aufgezeigt. Durch eine bauartbedingte größere Entfernung der Stirnwand (9) zu den Elementen der Tragstruktur (4,5) ist es beim Einbau des Schallwandlers (2) notwendig diesen zur akustischen Ankopplung an die Volumina der Elemente (4,5) in einen Raum(8) bzw. akustischen Kanal einzusetzen, welcher mit diesen in Verbindung steht.

Gewinnbringend lässt sich das dem Schallwandler (2) zugeordnete Resonanzvolumen zusätzlich vergrößern, wenn die Hohlräume der Elemente (4,5,6), welche im Wesentlichen unmittelbar akustisch an den Schallwandler (2) angekoppelt sind, zumindest teilweise an einer von dieser Ankoppelstelle entfernten Stellen mit Hohlräumen weiterer Elemente (6,7) der Tragstruktur des Fahrzeuges akustisch gekoppelt werden. So wäre es beispielsweise denkbar, wie in Figur 2 aufgezeigt, das Hohlraumvolumen des Längsträgers (5) über geeignete Durchlassöffnungen mit den Hohlraumvolumen des Biegequerträgers (6) und/oder des vorderen Querträgers (7) akustisch zu koppeln.

In besonders vorteilhafter Weise befindet sich die die Ankoppelstelle des Schallwandlers an den Hohlraum innerhalb der Tragstruktur (3,4,5) bzw. an den geführten akustischen Kanal (8) im Bereich der Stirnwand des Fußraums des Kraftfahrzeugführers bzw. des Beifahrers oder im Bereich des Radlaufkastens befindet. Dadurch dass durch die Erfindung der Aufbau einer dem Schallwandler (2) zuzuordnenden separaten, im Freiraum des Fahrzeuginnenraum unterzubringenden Lautsprecherbox entfällt, führt dessen Integration im Fußraum zu keinerlei Beeinträchtigung der Fahrzeuginsassen, bzw. der gegebenenfalls sich dort befindlichen Pedale. Dabei lässt sich der Schallwandler bzw. dessen Abdeckung besonders gewinnbringend dann vor Beschädigungen, insbesondere durch Fußtritte schützen, wenn sich die Ankoppelstelle des Schallwandlers (2) aus der Sicht des Kraftfahrzeugführers hinter den Pedalen (10) befindet.

## Patentansprüche

1. Lautsprechersystem für ein Kraftfahrzeug,
umfassend wenigstens einen aktiven Schallwandler (2) und einen Resonanzraum, wobei der Schallwandler (2) in dem Lautsprechersystem integriert so ausgerichtet ist, dass der von ihm erzeugte Schall in das Innere des Kraftfahrzeuges (1) abstrahlt,
wobei der Schallwandler (2) auf seiner Rückseite akustisch an den Resonanzraum angekoppelt ist, welcher zumindest in Teilen durch den Hohlraum innerhalb einer Tragstruktur des Fahrzeuges (1) gebildet wird,
**dadurch gekennzeichnet,**
**dass** die akustische Ankopplung des Schallwandlers (2) im Umfeld eines Bereichs des Fahrzeuges (1) erfolgt, in welchem wenigstens zwei Elemente (3,4,5) der Tragstruktur aufeinander treffen, so dass zumindest ein Teil des Resonanzraums gemeinsam durch die Hohlräume dieser wenigsten zwei Elemente (3,4,5) der Tragstruktur gebildet wird.

2. Lautsprechersystem nach einem der vorhergehenden Ansprüche,
**dadurch gekennzeichnet,**
**dass** die Hohlräume der Elemente (3,4,5) der Tragstruktur, zumindest teilweise, an von der Ankoppelstelle des Schallwandlers (2) entfernten Stellen mit Hohlräumen weiterer Elemente (6,7) der Tragstruktur des Fahrzeuges (1) akustisch gekoppelt sind.

3. Lautsprechersystem nach Patentanspruch 2,
**dadurch gekennzeichnet,**
**dass** die Hohlräume des Querträgers (5) des Fahrzeuges (1) und der Hohlraum des Biegequerträgers (6) und/oder des vorderen Querträgers (7) akustisch miteinander gekoppelt sind.

4. Lautsprechersystem nach einem der vorhergehenden Ansprüche,
**dadurch gekennzeichnet,**
**dass** die Ankopplung des Schallwandlers 82) an den Hohlraum innerhalb der Tragstruktur über einen geführten akustischen Kanal (8) erfolgt.

5. Lautsprechersystem nach einem der vorhergehenden Ansprüche,
**dadurch gekennzeichnet,**
**dass** sich die Ankoppelstelle des Schallwandlers (2) an den Hohlraum innerhalb der Tragstruktur (3, 4, 5) bzw. an den geführten akustischen Kanal (8) im Bereich der Stirnwand (9) des Fußraums des Kraftfahrzeugführers bzw. des Beifahrers oder im Bereich des Radlaufkastens befindet.

6. Lautsprechersystem nach Anspruch 5,
**dadurch gekennzeichnet,**
**dass** sich die Ankoppelstelle aus der Sicht des Kraftfahrzeugführers hinter den Pedalen (10) befindet.

## Claims

1. Loudspeaker system for a motor vehicle,
having at least one active sound transducer (2) and a resonant area, the sound transducer (2) being aligned integrally in the loudspeaker system such that the sound produced by it is emitted into the interior of the motor vehicle (1),
the sound transducer (2) being acoustically coupled on its rear face to the resonant area which is formed at least in parts by the cavity within a supporting structure of the vehicle (1),
**characterized in that**
the sound transducer (2) is acoustically coupled in the area surrounding an area of the vehicle (1) in which at least two elements (3,4,5) of the supporting structure meet one another, such that at least a portion of the resonant area is jointly formed by the cavities in these at least two elements (3,4,5) of the supporting structure.

2. Loudspeaker system according to the preceding claim,
**characterized in that**
the cavities in the elements (3,4,5) of the supporting structure are at least partially acoustically coupled at points which are remote from the coupling point of the sound transducer (2) to cavities in further elements (6,7) in the supporting structure of the vehicle (1).

3. Loudspeaker system according to patent claim 2,
**characterized in that**
the cavities in the transverse support (5) of the vehicle (1) and the cavity in the bending transverse support (6) and/or the front transverse support (7) are acoustically coupled to one another.

4. Loudspeaker system according to one of the preceding claims,
**characterized in that**
the sound transducer (2) is coupled to the cavity within the supporting structure via a guided acoustic channel (8).

5. Loudspeaker system according to one of the preceding claims,
**characterized in that**
the point at which the sound transducer (2) is coupled to the cavity within the supporting structure (3,4,5) and/or to the guided acoustic channel (8) is located in the area of the end wall (9) of the footwell of the motor vehicle driver or of the front-seat passenger, or in the area of the wheelbox.

6. Loudspeaker system according to Claim 5,
**characterized in that**
the coupling point is located behind the pedals (10), where the motor vehicle driver cannot see it.

## Revendications

1. Système de haut-parleur pour un véhicule automobile, comprenant au moins un transducteur acoustique (2) et une chambre de résonance, dans lequel le transducteur acoustique (2) intégré dans le système de haut-parleur est orienté de telle manière que le son qu'il produit soit émis vers l'intérieur du véhicule automobile (1), dans lequel le transducteur acoustique (2) est couplé acoustiquement sur sa face arrière à la chambre de résonance, qui est formée au moins en partie par la cavité à l'intérieur de la structure de support du véhicule (1), **caractérisé en ce que** le couplage acoustique du transducteur acoustique (2) est réalisé dans le champ périphérique d'une région du véhicule (1), dans laquelle au moins deux éléments (3, 4, 5) de la structure de support se touchent mutuellement, de telle manière qu'au moins une partie de la chambre de résonance soit formée en commun par les cavités de ces au moins deux éléments (3, 4, 5) de la structure de support.

2. Système de haut-parleur selon la revendication 1, **caractérisé en ce que** les cavités des éléments (3, 4, 5) de la structure de support sont acoustiquement couplées au moins en partie, en des endroits éloignés de l'endroit de couplage du transducteur acoustique (2), à des cavités d'autres éléments (6, 7) de la structure de support du véhicule (1).

3. Système de haut-parleur selon la revendication 2, **caractérisé en ce que** les cavités de la traverse (5) du véhicule (1) et la cavité de la traverse de flexion (6) et/ou de la traverse avant (7) sont acoustiquement couplées les unes aux autres.

4. Système de haut-parleur selon l'une quelconque des revendications précédentes, **caractérisé en ce que** le couplage du transducteur acoustique (2) à la cavité à l'intérieur de la structure de support est réalisé au moyen d'un canal acoustique guidé (8).

5. Système de haut-parleur selon l'une quelconque des revendications précédentes, **caractérisé en ce que** l'endroit de couplage du transducteur acoustique (2) à la cavité à l'intérieur de la structure de support (3, 4, 5) ou au canal acoustique guidé (8) se trouve dans la région de la paroi frontale (9) de l'espace au pied du conducteur du véhicule ou du passager ou dans la région du caisson du passage de roue.

6. Système de haut-parleur selon la revendication 5, **caractérisé en ce que** l'endroit de couplage se trouve derrière les pédales (10), hors de la vue du conducteur du véhicule.
